# EUROPEAN PATENT SPECIFICATION

(11) **EP 4 315 535 B1**
(45) Date of publication and mention of the grant of the patent: **16.04.2025**
(21) Application number: 22724799.6
(22) Date of filing: 22.03.2022
(51) Int. Cl.: H02B 13/035, H01H 33/12, H01H 33/24, H01H 33/56, H01H 31/00, H01H 33/02

(54) **GAS-INSULATED ELECTRICAL SWITCHGEAR FOR MEDIUM AND HIGH VOLTAGE ELECTRICAL DISTRIBUTION NETWORKS**
GASISOLIERTE SCHALTANLAGE FÜR MITTEL-UND HOCHSPANNUNGSVERTEILUNGSNETZTE
APPAREILLEGE DE COUPURE ISOLÉ AU GAZ POUR RÉSEAUX DE DISTRIBUTION MOYENNE ET HAUTE TENSION

(30) Priority: 23.03.2021 ES 202130573 U
(43) Date of publication of application: 07.02.2024
(73) Proprietor: ORMAZABAL Y CIA., S.L.U., 48140 Igorre (Bizkaia) (ES)
(72) Inventor: RANEDO TORRES, Luis, 48140 Igorre (Bizkaia) (ES); SÁNCHEZ RUIZ, Juan Antonio, 48140 Igorre (Bizkaia) (ES)
(74) Representative: Herrero & Asociados, S.L.
(86) International application number: PCT/ES2022/070164
(87) International publication number: WO 2022/200659

(56) References cited:
- WO-A1-2019/138383
- WO-A1-2020/216976
- JP-A- 2000 357 442
- JP-A- 2004 056 844
- US-A- 4 424 411

## Description

### OBJET OF THE INVENTION

The present invention has its field of application in electrical power distribution systems, in particular, it relates to an electrical switchgear integrated inside a gas-insulated enclosure that comprises a series of elements, among others, a means of operation that allows performing the operating functions of breaking, making, disconnecting and grounding of the electrical circuit, so that said switchgear integrated in the aforementioned enclosure allows configuring different electrical diagrams.

### BACKGROUND OF THE INVENTION

Currently, the electrical switchgear used in electrical power distribution networks is installed in usually metal enclosures, called cells. Said switchgear comprises operating means that perform the functions of breaking - making - disconnecting - grounding the system. In this way, in cases where there is, for example, a fault in the distribution line, an interruption due to works, maintenance or optimization of load distribution, such operating means can be activated to obtain the desired distribution of electrical power, prevent consumers from being left without voltage or to guarantee the protection of people and electrical equipment, such as transformers.

In addition to the operating means, the electrical switchgear incorporated within the enclosures also includes main circuit bars, which allow the input / output of electrical power to the electrical switchgear and which are located upstream of the operating means allowing the entry of said power to said operating means, and branch bars that are located downstream of the operating means and that output the electrical power that passes through said operating means.

Currently, part of the electrical switchgear, such as the operating means, the main circuit bars and the branch bars, are incorporated in a metal enclosure insulated in a gas, such as air, the enclosure being airtight in those cases in which the gas used is not air, such as sulfur hexafluoride (SF₆), dry air, nitrogen, CO₂, etc. The purpose of the insulation gas is to reduce the distance between phases and thus achieve an enclosure being compact and insensitive to external or environmental conditions such as pollution or humidity. Regarding the type of gas used, it is worth mentioning that the most used gas in recent years is SF₆ gas due to its excellent dielectric properties and, among many other advantages, because it is not toxic to people. However, this gas has a great environmental impact due to its high greenhouse effect potential (GWP = 22,800). For this reason, in recent years alternative gases have been sought, such as dry air, N₂, O₂ or CO₂, or mixtures of fluoroketones with gases such as CO₂, N₂, O₂, air or mixtures thereof, which can replace this SF₆ gas in this type of electrical switchgear.

Also, the same insulating medium, such as a dielectric gas from those mentioned above, in some cases also allows the extinction of the electric arc generated between the contacts of the switch in the opening and closing operations.

One of the objectives of the use of an insulating gas is to be able to reduce the distance between phases, that is, the distance between the active parts under voltage, such as the distance between the bars of the main circuit or between the branch bars, to thus achieve a more compact enclosure.

As an alternative to the use of a gas as an insulating medium, which has a great environmental impact, it is common for part of this electrical switchgear to be encapsulated in solid insulation, such as insulating resin, thus reducing the distance between phases. In these cases, the dielectric medium used to extinguish the electric arc is usually vacuum or a fluid, such as a gas or a liquid, to perform the required operating functions mentioned above: breaking - making - disconnecting - grounding executed correspondingly by the operating means, such as switches. In short, the electrical switchgear is insulated in an insulation medium with high electrical resistance and a compact structure, managing to reduce the insulation distance between the different elements that make up the switchgear and the size of the systems.

In this sense, examples can be cited in which solid insulation is used as a means of insulation in electrical switchgear. It is worth mentioning as an example the patent application WO0150563A1 that deals with a plurality of insulating resin bodies, wherein several vacuum switches are encapsulated: some, corresponding to the making-disconnecting-grounding functions, are encapsulated in an insulating body together with their respective actuators, while a different insulating body encapsulates the vacuum switch that performs the breaking-making functions together with its corresponding actuator. Likewise, the branch bars and the bars of the main circuit are also encapsulated in independent insulating bodies. Each one of these independent insulating bodies is installed inside a different compartment of the cell, joining said insulating bodies through bushings that are part of the same insulating bodies.

However, one of the drawbacks of the invention described in WO0150563A1 is that for each of the breaking-making-disconnecting-grounding functions it is necessary to use a different module with its respective actuator and, in addition to the need of encapsulating more than one operating means in each of the modules and integrating said modules in different compartments within a cell, it entails an increase in the dimensions of the electrical switchgear, thus creating space problems within the electrical distribution facilities. The considerable cost due to the large amount of resin that is necessary to make the encapsulations and the long manufacturing time are added thereto.

In this same line, mention can be made of the inventions contained in WO02082606A1 and EP0393733A1, wherein various operating means are described that perform the functions of making-disconnecting-grounding and other components, such as fuses, that perform the function of breaking in the event of fault, all of them being encapsulated in an insulating body integrated inside a compartment of the cell, while, in another different compartment of said cell, the actuating element of each of the necessary operating means is integrated.

In these last two solutions, however, the aforementioned problem of having to use various operating means to carry out the different functions of breaking-making-disconnecting-grounding is repeated, so that the cells that incorporate the switchgear tend to be bulky. In addition, the problem that the cells are bulky is reinforced due to the fact that the actuation elements of such operating means are integrated in compartments different from those that integrate the operating means, increasing the number of compartments in the cells, their size and therefore that of said electrical switchgear in the electrical distribution network.

In addition to the examples cited above, other examples can be cited in which solid insulation is used as a means of insulation in electrical switchgear, such as, for example, CN207896544U, CN205911661U, CN205901163U, CN106329320B, CN205753147U, CN105846335B, etc., which show disadvantages similar to those already mentioned.

In addition, another added drawback that this type of solutions that use solid insulation may have is that related to the encapsulation of the different elements. Due to the thermal stress that appears at the joint of the body having insulating material with the element to be encapsulated, specifically due to the different coefficients of thermal expansion of the materials, interstices or air bubbles may appear between the different surfaces, and therefore cause partial discharges that would deteriorate the insulating materials and could end up with the dielectric breakdown of the insulating medium. Likewise, there could be problems in shielding the elements to be encapsulated, for example adhesion problems.

In addition, the fact of arranging the encapsulated elements, in the same module or in different modules, entails the inconvenience that in case of needing to replace it, the replacement of the complete encapsulated module may be mandatory, with the consequences that all this entails, high time involved replacement, labor cost, etc.

On the other hand, regarding the geometry of the bars of the main circuit or of the branch bars and the coupling between them, patent US6433271B1 discloses a system of bars of the main circuit with tubular geometry and a solution for the coupling between said bars for air-insulated electrical switchgear. In this sense, it is explained that the connection between bars can be carried out in such a way that one end of a tubular bar with an insertion end, which includes grooves for the location of a contact element (such as an annular spring) and for the location of a sealing element, is attached or inserted into the receiving end of another bar. The bars have a tubular and hollow geometry, so that they can be cooled by the passage of a gas through their interior. The area of joint between bars, as mentioned above, is sealed by a sealing element, so that the interior space of the tubular bars is totally protected from the surrounding atmosphere, and the hollow tubular bars can be optionally filled with a gas. The sealing of joints also provides protection against corrosion. The area of joint is finally also protected with an external protection element, such as a retractable sleeve, placed on the reception and insertion ends of the tubular bars. In said patent two other embodiments of coupling between bars of the main circuit are also explained, wherein in one embodiment the coupling is achieved by a tubular joining means that is inserted inside the ends (receivers) of both bars to be coupled, while in the other embodiment coupling is achieved by means of a tubular joining means that receives at each of its ends the ends (insertion) of both bars to be coupled.

Said patent US6433271B1, as mentioned therein, is aimed at reducing the space required by air-insulated cells that have a main circuit bar system, as well as to simplify the connection between bars, their manufacturing and assembly. However, nothing is mentioned about the reduction of the distance between phases or between bars, so enclosures or cells that comprise the electrical switchgear will not have their sizes reduced either, this problem being aggravated in this case due to the fact that the electrical switchgear is air-insulated, a gas that comprises lower dielectric rigidity than other gases.

The application JP2004056844A with its solution aims to improve the insulation performance against ground, as well as between phases in conductive joints. In this way, it shows a particular embodiment of the joints between bars, which comprise a rounded shape in order to optimize the geometry of the electric field and avoid the so-called peak effect in the joints or avoid the concentration of the electric field at said points. However, having rounded geometries to avoid the peak effect or the concentration of the electric field is something well known and common in the state of the art.

For its part, the utility model CN209217565U aims to improve the insulation between phases inside a switch tank that is insulated in nitrogen or dry air. The switch is partially enclosed in a U-shaped insulating box (made of epoxy resin). Even the electrical joints are provided with a protective apron, so that the insulation between phases is improved and therefore the distances between phases are reduced making electrical switchgear less bulky and more compact.

US patent application US2018366925A1 shows the solution of a busbar inside an enclosure, said busbar also being incorporated inside a cylindrical-shaped cover insulated in a gas. The cover is sealed and contains a dielectric gas, and the cover can be made of metallic or non-metallic material (such as fiberglass). Each cover is a module that corresponds to a busbar section and the different busbar sections are interconnected with each other through bushing-type interconnections on the adjoining end faces of the cover modules. Likewise, various operating means are described that perform the functions of breaking-making-disconnecting-grounding. The interconnection between said operating means and the busbar is also carried out by means of second connectors outside the cover modules.

On this occasion, the problem of having to use various operating means to carry out the different functions of breaking-making-disconnecting-grounding is also repeated, so that the cells that incorporate the electrical switchgear tend to be bulky. On the other hand, the different components of the electrical switchgear, such as the busbar or bars of the main circuit and the operating means, are incorporated inside different enclosures or compartments, using connectors for the interconnection between said components, thereby reinforcing the problem that the cells are voluminous.

Document WO2020216976, of this same applicant, is according to the preamble of independent claim 1 and discloses a gas shut-off switch provided with various operating positions and intended to be isolated in a dielectric gas inside an electrical switchgear cell having at least one housing comprising: a pair of fixed contacts arranged diametrically opposite one another and a movable contact with rotary movement in order to connect electrically to the fixed contacts; an arc chamber; and an electric arc blowing means solidly connected to the movable contact. According to the invention, the arc chamber comprises a communication path to the exterior of the housing, which allows both the outflow of the gases generated during electric arc blowing and the inflow of clean dielectric gas into said arc chamber.

Lastly, document WO2019138383 discloses an electrical switching device which comprises: a conductive enclosure; a first insulating tube located inside the conductive enclosure; a switch located inside the first insulating tube; second insulating tubes located inside the conductive enclosure, each second insulating tube extending in a direction that is different from the direction of the first insulating tube, the inside of each second insulating tube communicating at one of its two ends with the inside of the first insulating tube, the first insulating tube and the second insulating tubes extending along a same plane; and electrical components, such as electrical conductors, an earthing switch, a surge arrester and a sensor, located inside the second insulating tubes and electrically connected to the switch.

Therefore, there is a need in the state of the art to have electrical switchgears for their application in electrical power distribution systems that, solving the problems of impact on the environment, insulation distances between the different elements that make up the electrical switchgear, sizes of the same electrical switchgear and size of the systems, costs, manufacturing times, etc. mentioned above, are capable of providing a compact, economical, easy-to-manufacture and environmentally friendly solution.

### DESCRIPTION OF THE INVENTION

The present invention relates to an electrical switchgear for its application in electrical power distribution systems, such as, for example, electrical transformation centers, distribution centers, substations, etc., for the protection and operation of electrical circuits, and which is intended to solve each and every one of the problems mentioned above.

Said electrical switchgear comprises a first enclosure, which may be sealed, shielded and grounded, and insulated in a gas with a relative pressure, that is, higher than atmospheric pressure, such as, for example, air, dry air, N₂, O₂, CO₂, or gas mixtures such as fluoroketones with carrier gases such as CO₂, N₂, O₂, air or mixtures thereof, or gas mixtures such as non-flammable hydrofluoroolefins with carrier gases such as N₂, O₂, dry air, helium, CO₂ or mixtures thereof, etc., thus avoiding the use of any other type of insulation medium, such as SF₆ gas, which has an environmental impact.

This first enclosure comprises at least one means of electrical connection, such as a bushing, and at least one means of mechanical connection accessible both from the inside and from the outside, the electrical switchgear of the invention being installed inside said first enclosure and therefore isolated in the same gas that contains the enclosure. This electrical switchgear includes:
- An operating means arranged between at least one bar of a main circuit and at least one branch bar, said operating means comprising a gas breaking switch, such as, for example, a load break switch, with at least a moving contact and a fixed contact, capable of performing the functions of breaking, making, disconnecting and grounding, thus avoiding the use of various operating means for the performance of the different functions and therefore reducing the sizes of the electrical switchgear and ultimately the systems.
- an actuating element configured to actuate the operating means so that it can carry out functions of breaking, making, disconnecting and grounding, and
- an operating mechanism to cause actuation of the actuation element and that can be arranged externally to the first enclosure.

In accordance with the present invention, the electrical switchgear also comprises a plurality of covers that incorporate inside, concentrically, the bars of the main circuit and the branch bars, wherein the existing medium between said bars (of the main circuit and the branch ones) and the cover is a gas. The cover comprises one or more hollow pieces of cylindrical geometry and comprise a plastic material or other electrically non-conductive material. The covers and the operating means are incorporated inside the first gas-insulated enclosure. For its part, the operating means is mounted inside a second enclosure and this second enclosure in turn is mounted inside the first gas-insulated enclosure, so that the same insulating gas contained in the first enclosure also allows the extinction of the electric arc generated between the switch contacts in the opening and closing operations. As mentioned above, the electrical switchgear of the invention only comprises a single operating means, which performs all the operating functions, which are the functions of breaking, making, disconnecting and grounding, for which reason the cells or enclosures that incorporate this electrical switchgear will be less voluminous and more compact.

The parts of the cover are attached to each other by means of at least one first joining means, said first joining means being able to comprise an elastic material, such as silicone, in the form of a ring, which allows the joining and sealing between the different pieces of the cover.

The main circuit bars and the branch bars comprise a cylindrical geometry, and furthermore comprise at least one second connection means that allows the connection between bars of the main circuit or the connection between branch bars. The second joining means comprises a rounded piece, such as a ball or ball joint, at least one fixing point such as a bolt and may include at least one through hole which can be traversed, for example, by a screw or a threaded stud, in such a way that it allows joining between bars, thus obtaining, for example, T-bar joints, elbow joints, straight joints or crossed joints. In this sense, this second joining means allows different layouts/distributions of both the main circuit bars and the branch bars to be obtained inside the first enclosure in a simple and quick way to assemble, thus being able to choose the best layout/ distribution of bars inside the first enclosure in order to reduce sizes and obtain a more compact electrical switchgear. Likewise, this second joining means, due to its rounded shape, allows optimizing the geometry of the electric field in the joints, and these joints also have a high thermal-dynamic resistance. These bars for both the main and branch circuits are installed concentrically inside the covers, so that they are isolated from one another, thus reducing the distances between phases and, ultimately, the sizes of the electrical switchgear, resulting in more compact enclosures or cells incorporating said electrical switchgear.

Once the main circuit bars and the branch bars have been installed with their respective covers inside the first enclosure, that is, once the desired layout/distribution of both the main circuit bars and the branch bars has been obtained inside of the first enclosure or when it is not necessary to pass the bars of the main circuit and/or the branch bars, those ends of the covers that remain open are closed by means of a closing means or plug, which is coupled by means of the first joining means to said covers at their open ends. Like the covers, the closing means or plug comprises a plastic material or other electrically non-conductive material. The electrical connection means and the mechanical connection means are accessible from the outside of the first enclosure, in such a way that the coupling of other elements with the first enclosure is facilitated, such as the operating mechanism by means of the mechanical connection means and cables of the electrical network or other electrical switchgear through the means of electrical connection. Some electrical connection means are connected to the bars of the main circuit and other electrical connection means connected to the branch bars, these electrical connections being of the plug-in type and comprising around them, surrounding the electrical connections, at least one diffuser, made of conductive material or with a conductive or semiconductive surface, in order to control the electric field and to dissipate the heat generated in said electrical connections. Likewise, the electrical connection means are coupled with the covers, which incorporate the bars of the main and branch circuit, by means of the first joining means, thus leaving the joint between both parts sealed.

The possibility has been considered that the electrical connection between the bars of the main circuit or the branch bars and the electrical connection means may comprise a connector configured to connect at one of its ends to the electrical connection means and at another of its ends to the main circuit bar or branch bar. Likewise, this connector may comprise at least one conductive part and at least one tightening means, such as a spring, so that the electrical connection between said at least one conductive part and the main circuit bar or the branch bar is of the plug-in type. The conductive parts are tightened against the bars (of the main or branch circuit) by means of the tightening means, guaranteeing an appropriate electrical contact between said bars and the conductive parts. This connector may also comprise a conductive terminal arranged between the main circuit bar or the branch bar and said, at least one, conductive part of the connector, such that, in this case, the bars are connected to said conductive terminal and the latter connects to conductive parts.

The electrical switchgear of the invention may comprise a cable compartment where the electrical connection means of the first gas-insulated enclosure are accessible to be able to make the connection with the cables of the electrical network. Likewise, the possibility has been contemplated that the operating mechanism can be mounted inside another enclosure, different from the first gas-insulated enclosure and the second enclosure of the operating means, said third enclosure of the operating mechanism being mounted above the cable compartment.

In short, through the joint use of the second joining means, the covers and the first joining means, a compact, lower-cost electrical switchgear is achieved, immersed in an environmentally friendly gas with a pressure greater than atmospheric pressure that allows the isolation between phases or active parts under voltage, as well as the extinction of the electric arc generated between the contacts of the operating means in the opening and closing operations.

### DESCRIPTION OF THE FIGURES

Figure 1.- Shows a sectioned front elevational view of the electrical switchgear of the invention inside the first gas-insulated enclosure.
Figure 2.- Shows a sectioned side elevation view of the electrical switchgear in Figure 1.
Figure 3.- Shows a sectional detail view of the electrical switchgear, wherein the coupling between the pieces of the cover by means of the first joining means is observed.
Figure 4.- Shows a sectional detail view of the electrical switchgear, wherein the connection between the bars of the main circuit or between the branch bars by means of the second connection means is observed.
Figure 5.- Shows a sectional detail view of the electrical switchgear, wherein the electrical connection between an electrical connection means and a bar of the main circuit is observed.
Figure 6.- Shows a schematic perspective view of the cell that incorporates the electrical switchgear.

### PREFERRED EMBODIMENT OF THE INVENTION

A preferred embodiment is described below with reference to the figures cited above, without limiting or reducing the scope of protection of the present invention.

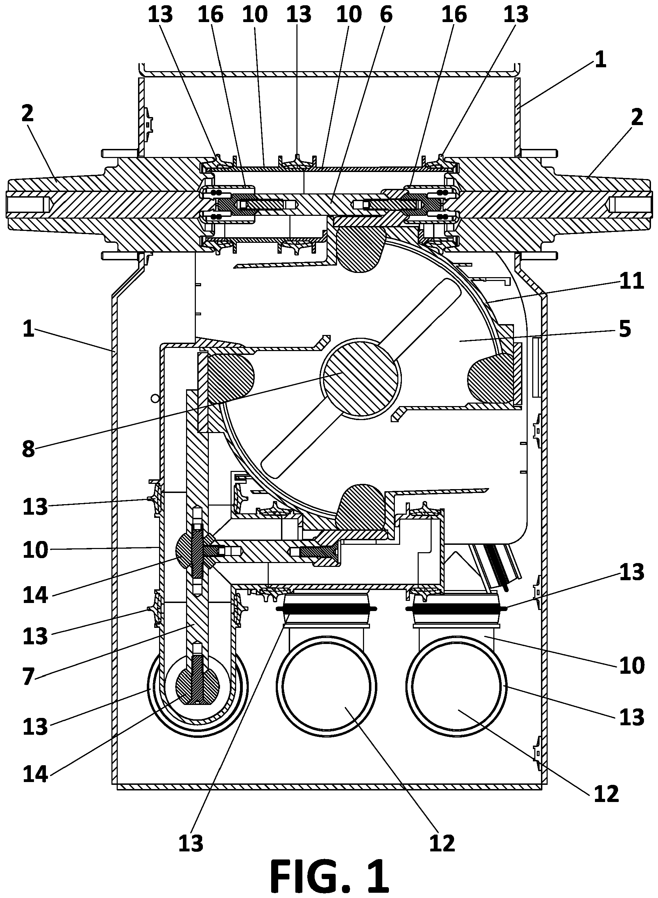

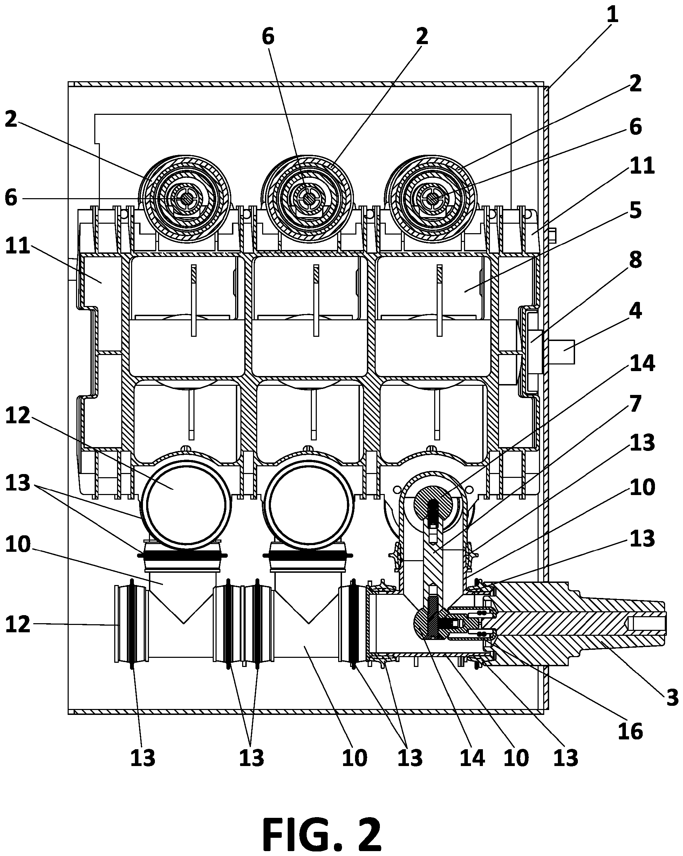

The electrical switchgear object of the present invention is applied in electrical power distribution systems such as, for example, electrical transformation centers, distribution centers, substations, etc., for the protection and operation of electrical circuits. As shown in figures 1 and 2, said switchgear is integrated inside a first enclosure (1), this first enclosure (1) being able to be watertight, and therefore insulated in a dielectric gas, for example , air, dry air, N₂, O₂, CO₂, or gas mixtures such as fluoroketones with carrier gases such as CO₂, N₂, O₂, air or mixtures thereof, or gas mixtures such as, non-flammable hydrofluoroolefins with carrier gases such as N₂, O₂, dry air, helium, CO₂ or mixtures thereof, etc.

This first enclosure (1) comprises at least one electrical connection means (2, 3), such as a bushing, and at least one mechanical connection means (4) accessible both from the inside and from the outside, with the switchgear of the invention installed inside said first enclosure (1) and therefore insulated in the same gas contained by the enclosure (1).

As shown in figures 1 and 2, the electrical switchgear comprises an operating means (5) integrated inside a second enclosure (11), arranged between at least one bar (6) of a main circuit and at least one branch bar (7). The operating means (5) can comprise a gas breaking switch, which can be a load break switch or a circuit breaker. Likewise, said operating means (5) can be a rotary gas breaking switch with at least one fixed contact and one moving contact.

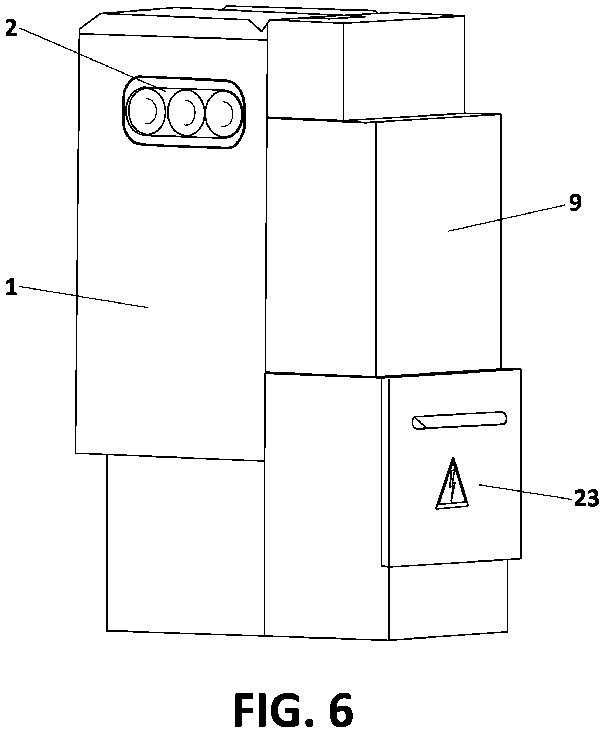

The electrical switchgear of the invention only comprises a single operating means (5), as can be seen in figure 1, which executes all the operating functions, which are the functions of breaking, making, disconnecting and grounding, the electrical switchgear comprising an actuating element (8) configured to actuate the operating means (5) that performs said functions of breaking, making, disconnecting and grounding. Likewise, the electrical switchgear comprises an operating mechanism (9) to produce the actuation of the actuating element (8), and which can be arranged outside the first enclosure (1), as shown in figure 6.

The electrical switchgear also comprises a plurality of covers (10) that incorporate inside, concentrically, the bars (6) of the main circuit and the branch bars (7), see figures 1 to 5, wherein the medium existing between said bars (6, 7) and the cover (10) is a gas. The cover (10) can comprise one or several hollow pieces of cylindrical geometry made of a plastic material or another non-electrical conducting material. The covers (10) and the operating means (5) are incorporated inside the first gas-insulated enclosure (1). For its part, the operating means (5) are mounted inside a second enclosure (11) and this second enclosure (11) in turn is mounted inside the first gas-insulated enclosure (1), therefore, the same insulating gas contained in the first enclosure (1) also allows the extinction of the electric arc generated between the contacts of the operating means (5) in the opening and closing operations.

As can be seen in figures 1-5, the different parts of the cover (10) are coupled to each other by means of at least one first joining means (13), said first joining means (13) being able to comprise a elastic material, such as silicone, in the form of a ring, which allows joining and sealing between the different parts of the cover (10). Those ends of the covers (10) that can remain open are closed by means of a closing means or plug (12), which is coupled by means of the first joining means (13) to said covers (10) at their open ends, with the cover (10) remaining perfectly closed and sealed. Like the covers (10), the closing means or plug (12) is made of a plastic material or another non-electrical conducting material.

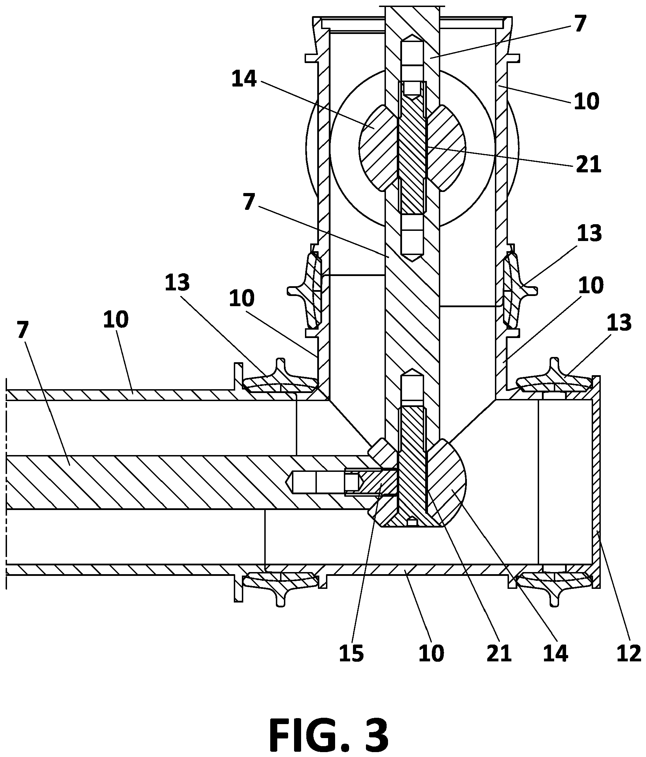

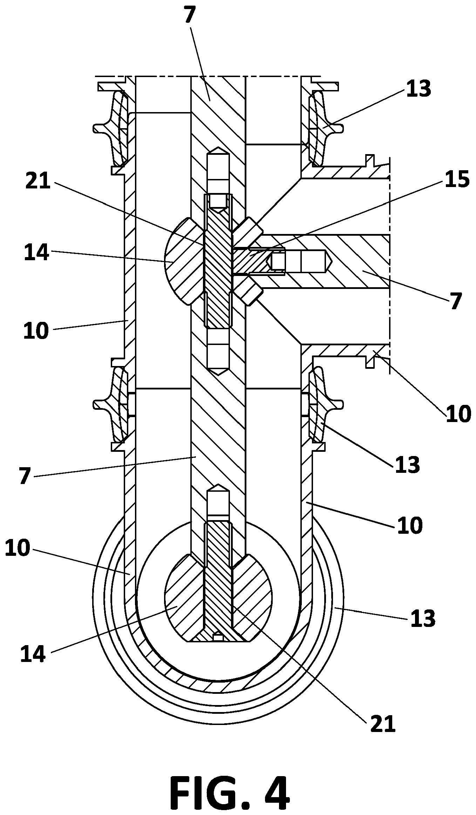

The bars (6) of the main circuit and the branch bars (7) comprise a cylindrical geometry, and also comprise at least one second joining means (14) that allows joining between bars (6) of the main circuit or joining between branch bars (7). As shown in figures 3 and 4, the second joining means (14) comprises a rounded piece, such as of a ball or ball joint type, at least one fixing point (15) such as a bolt and it can also comprise at least one through hole (21) which can be passed through, for example, by a screw or a threaded stud, in such a way that it allows joining between different pieces of bars (6) or between different pieces of bars (7), thus obtaining, for example, T-bar joints, elbow joints, straight joints or cross joints. In this sense, this second joining means (14) allows obtaining different layouts/distributions both of the bars (6) of the main circuit and of the branch bars (7) inside the first enclosure (1). Likewise, this second joining means (14), due to its rounded shape, allows optimization of the geometry of the electric field in the connections between bars, and these connections also have a high thermal-dynamic resistance. These bars (6, 7), both for the main and branch circuits, are installed concentrically inside the covers (10), so that they are isolated from one another.

As mentioned above, see figures 1 and 2, the electrical connection means (2, 3) and the mechanical connection means (4) are accessible from the outside of the first enclosure (1), so that the coupling of other elements with the first enclosure(1) is facilitated, such as the actuating mechanism (9) by means of the mechanical connection means (4) and cables of the electrical network or other electrical switchgear by means of the electrical connection means (2, 3), as can be seen in figure 6.

Figures 1, 2 and 5 show the way in which the electrical connection means (2) are connected to the bars (6) of the main circuit and the electrical connection means (3) connected to the branch bars (7), these electrical connections being of the plug-in type and comprising around them, surrounding the electrical connections, at least one diffuser (16) in order to control the electric field and to dissipate the heat generated in said electrical connections. Likewise, the electrical connection means (2, 3) are coupled with the covers (10), which incorporate the bars (6) of the main and branch circuit (7), by means of the first joining means (13), wherein the joint between both parts is thus sealed, both mechanically and electrically.

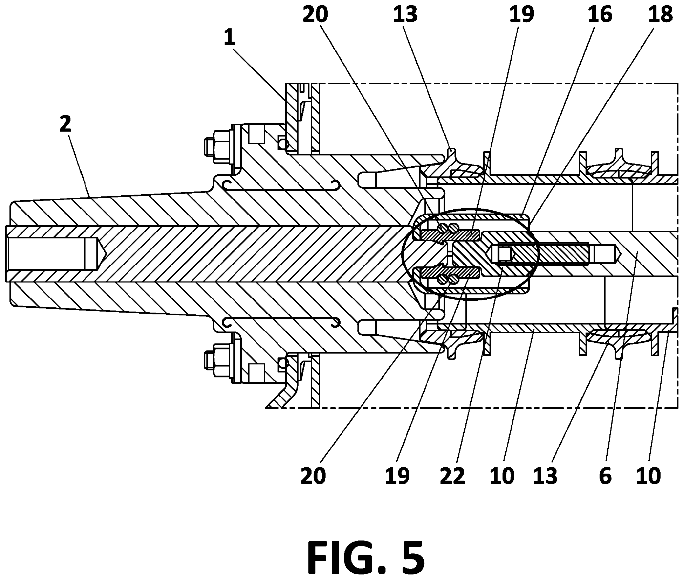

As can be seen in Figure 5, there has been considered the possibility that the electrical connection between the bars (6) of the main circuit or the branch bars (7) and the electrical connection means (2, 3) may comprise a connector (18) configured to connect at one of its ends to the electrical connection means (2, 3) and at another of its ends to the bar (6) of the main circuit or to the branch bar (7). Likewise, as shown in said figure 5, this connector (18) can comprise at least one conductive part (19) and at least one tightening means (20), such as a spring, so that the electrical connection between said, at least one conductive part (19) and the bar (6) of the main circuit or the branch bar (7) is of the plug-in type. The conductive parts (19) are tightened against the bars (6, 7) (of the main or branch circuit) by means of the tightening means (20), guaranteeing an appropriate electrical contact between said bars (6, 7) and the conductive parts (19). This connector (18) can also comprise a conductive terminal (22) arranged between the bar (6) of the main circuit or the branch bar (7) and said, at least one, conductive part (19) of the connector (18), so that, in this case, the bars (6, 7) are connected to said conductive terminal (22) and the latter is connected to the conductive parts (19).

As shown in Figure 6, the electrical switchgear comprises a cable compartment (23) wherein the electrical connection means (3) of the first gas-insulated enclosure (1) are accessible, on which some cables of the electrical network can be connected, and on said cable compartment (23) the operating mechanism (9) incorporated inside a third additional enclosure can be arranged.

## Claims

1. Gas-insulated electrical switchgear for medium and high voltage electrical distribution networks comprising:
- a first enclosure (1) insulated in a gas and provided with at least one electrical connection means (2, 3) and at least one mechanical connection means (4);
- an operating means (5) integrated inside a second enclosure (11), arranged between at least one bar (6) of a main circuit and at least one branch bar (7), said operating means (5) comprising a gas breaking switch, said second enclosure (11) equipped with the operating means (5) being comprised inside the first enclosure (1);
- an actuating element (8) configured to actuate the operating means (5) that performs the functions of breaking, making, disconnecting, and grounding; and
- an operating mechanism (9) to cause actuation of the actuating element (8);
- wherein the mechanical connection means (4) couples the operating mechanism (9) to the first enclosure (1);
the gas-insulated electrical switchgear being **characterized in that**:
- the switchgear further comprises a plurality of covers (10) that incorporate inside, concentrically, the bars (6) of the main circuit and the branch bars (7), the medium between the bars (6, 7) and the cover (10) being a gas;
- the first enclosure (1) comprises inside the covers (10) that incorporate the bars (6) of the main circuit and branch bars (7);
- the covers (10) are made of an electrically non-conductive material and comprise hollow parts, having cylindrical geometry, which are coupled to each other by means of at least one first joining means (13); and **in that**
- the bars (6) of the main circuit and the branch bars (7) have a cylindrical geometry, and **in that** they further comprise at least one second joining means (14) that allows joining between bars (6) of the main circuit or joining between branch bars (7).

2. Electrical switchgear according to claim 1, **characterized in that** the first joining means (13) comprise an elastic material, which allows joining and sealing between the different parts of the cover (10).

3. Electrical switchgear according to claim 1, **characterized in that** the covers (10) comprise at least one closing means (12) intended to be coupled by means of the first joining means (13) to said covers (10) at their open ends.

4. Electrical switchgear according to claim 3, **characterized in that** the closing means (12) is made of an electrically non-conductive material.

5. Electrical switchgear according to claim 1, **characterized in that** the second joining means (14) comprises a rounded piece, at least one fixing point (15) and at least one through hole (21).

6. Electrical switchgear according to any of the preceding claims, **characterized in that** the first enclosure (1) is sealed, shielded and grounded, as well as insulated in a dielectric gas at a relative pressure.

7. Electrical switchgear according to claim 1, **characterized in that** the operating means (5) comprises a rotary load break switch.

8. Electrical switchgear according to claim 6, **characterized in that** the electrical connection means (2, 3) and the mechanical connection means (4) are accessible from the outside of the enclosure (1).

9. Electrical switchgear according to claim 8, **characterized in that** the electrical connection means (2,3) are electrically connected to the bars (6) of the main circuit and the branch bars (7) respectively through electrical connections, said electrical connections being surrounded by a diffuser (16).

10. Electrical switchgear according to claim 9, **characterized in that** the electrical connection between the electrical connection means (2, 3) and the bars (6, 7) comprises a connector (18) configured to connect at one of its ends to the electrical connection means (2) and at another of its ends to the bar (6) of the main circuit or configured to be connected at one end to the electrical connection means (3) and at the other end to the branch bar (7).

11. Electrical switchgear according to claim 10, **characterized in that** the connector (18) comprises at least one conductive part (19) and at least one tightening means (20), so that the electrical connection between said at least one conductive part (19) and the bar (6) of the main circuit or branch bar (7) is of the plug-in type.

12. Electrical switchgear according to claim 11, **characterized in that** the connector (18) comprises a conductive terminal (22) arranged between the bar (6) of the main circuit or the branch bar (7) and said, at least one, conductive part (19).

13. Electrical switchgear according to claim 9, **characterized in that** the electrical connection means (2, 3) are coupled with the covers (10) by means of the first joining means (13).

## Patentansprüche

1. Gasisolierte elektrische Schaltanlage für Mittel- und Hochspannungsstromnetze, umfassend:
• ein erstes Gehäuse (1), das mit Gas isoliert ist und mit mindestens einem elektrischen Anschlussmittel (2, 3) und mindestens einem mechanischen Anschlussmittel (4) versehen ist;
• ein Betätigungsmittel (5), das in einem zweiten Gehäuse (11) integriert ist, das zwischen mindestens einer Schiene (6) eines Hauptstromkreises und mindestens einer Abzweigschiene (7) angeordnet ist, wobei das Betätigungsmittel (5) einen Gastrennschalter umfasst, wobei das zweite Gehäuse (11), das mit dem Betätigungsmittel (5) ausgestattet ist, sich innerhalb des ersten Gehäuses (1) befindet;
• ein Aktuierungselement (8), das so konfiguriert ist, dass es die Betätigungsmittel (5) betätigt, die die Funktionen des Trennens, Herstellens, Unterbrechen und Erdens ausführt; und
• einen Betätigungsmechanismus (9), um die Betätigung des Aktuierungselements (8) zu bewirken;
• wobei das mechanische Anschlussmittel (4) den Betätigungsmechanismus (9) mit dem ersten Gehäuse (1) koppelt;
wobei die gasisolierte elektrische Schaltanlage **dadurch gekennzeichnet ist, dass**:
• die Schaltanlage ferner eine Vielzahl von Abdeckungen (10) umfasst, die im Inneren konzentrisch die Schienen (6) des Hauptstromkreises und die Abzweigschienen (7) enthalten, wobei das Medium zwischen den Schienen (6, 7) und der Abdeckung (10) ein Gas ist;
• das erste Gehäuse (1) umfasst innerhalb der Abdeckungen (10) die Schienen (6) des Hauptstromkreises und die Abzweigschienen (7);
• die Abdeckungen (10) aus einem elektrisch nicht leitenden Material bestehen und Hohlteile mit zylindrischer Geometrie umfassen, die durch mindestens ein erstes Verbindungsmittel (13) miteinander verbunden sind; und dass
• die Schienen (6) des Hauptstromkreises und die Abzweigschienen (7) eine zylindrische Geometrie aufweisen und dass sie ferner mindestens ein zweites Verbindungsmittel (14) umfassen, das eine Verbindung zwischen den Schienen (6) des Hauptstromkreises oder eine Verbindung zwischen den Abzweigschienen (7) ermöglicht.

2. Elektrische Schaltanlage gemäß Anspruch 1, **dadurch gekennzeichnet, dass** die ersten Verbindungsmittel (13) ein elastisches Material umfassen, das eine Verbindung und Abdichtung zwischen den verschiedenen Teilen der Abdeckung (10) ermöglicht.

3. Elektrische Schaltanlage gemäß Anspruch 1, **dadurch gekennzeichnet, dass** die Abdeckungen (10) mindestens ein Schließmittel (12) umfassen, das dazu bestimmt ist, mittels des ersten Verbindungsmittel (13) mit den Abdeckungen (10) an ihren offenen Enden verbunden zu werden.

4. Elektrische Schaltanlage gemäß Anspruch 3, **dadurch gekennzeichnet, dass** das Schließmittel (12) aus einem elektrisch nicht-leitenden Material hergestellt ist.

5. Elektrische Schaltanlage nach Anspruch 1, **dadurch gekennzeichnet, dass** das zweite Verbindungsmittel (14) ein abgerundetes Teil, mindestens einen Befestigungspunkt (15) und mindestens ein Durchgangsloch (21) umfasst.

6. Elektrische Schaltanlage gemäß einem der vorstehenden Ansprüche, **dadurch gekennzeichnet, dass** das erste Gehäuse (1) abgedichtet, abgeschirmt und geerdet sowie in einem dielektrischen Gas bei einem relativen Druck isoliert ist.

7. Elektrische Schaltanlage nach Anspruch 1, **dadurch gekennzeichnet, dass** das Betätigungsmittel (5) einen drehbaren Lasttrennschalter umfasst.

8. Elektrische Schaltanlage gemäß Anspruch 6, **dadurch gekennzeichnet, dass** die elektrischen Anschlussmittel (2, 3) und die mechanischen Anschlussmittel (4) von außerhalb des Gehäuses (1) zugänglich sind.

9. Elektrische Schaltanlage gemäß Anspruch 8, **dadurch gekennzeichnet, dass** die elektrischen Anschlussmittel (2, 3) jeweils über elektrische Verbindungen mit den Schienen (6) des Hauptstromkreises bzw. den Abzweigschienen (7) elektrisch verbunden sind, wobei die elektrischen Verbindungen von einem Diffusor (16) umgeben sind.

10. Elektrische Schaltanlage gemäß Anspruch 9, **dadurch gekennzeichnet, dass** die elektrische Verbindung zwischen den elektrischen Anschlussmitteln (2, 3) und den Schienen (6, 7) einen Verbinder (18) umfasst, der so konfiguriert ist, dass er an einem seiner Enden mit den elektrischen Anschlussmitteln (2) und an einem anderen seiner Enden mit der Schiene (6) des Hauptstromkreises verbunden ist, oder so konfiguriert ist, dass er an einem Ende mit den elektrischen Anschlussmitteln (3) und am anderen Ende mit der Abzweigschiene (7) verbunden ist.

11. Elektrische Schaltanlage gemäß Anspruch 10, **dadurch gekennzeichnet, dass** der Verbinder (18) mindestens ein leitendes Teil (19) und mindestens ein Spannmittel (20) umfasst, so dass die elektrische Verbindung zwischen dem mindestens einen leitenden Teil (19) und der Schiene (6) des Hauptstromkreises oder der Abzweigschiene (7) vom Steckertyp ist.

12. Elektrische Schaltanlage gemäß Anspruch 11, **dadurch gekennzeichnet, dass** der Verbinder (18) einen leitenden Anschluss (22) umfasst, der zwischen der Schiene (6) des Hauptstromkreises oder der Abzweigschiene (7) und dem mindestens einen leitenden Teil (19) angeordnet ist.

13. Elektrische Schaltanlage gemäß Anspruch 9, **dadurch gekennzeichnet, dass** die elektrischen Anschlussmittel (2, 3) mit den Abdeckungen (10) mittels der ersten Verbindungsmittel (13) gekoppelt sind.

## Revendications

1. - Appareillage de commutation électrique à isolation gazeuse pour réseaux de distribution moyenne et haute tension comprenant :
- un premier boîtier (1) isolé dans un gaz et équipé d'au moins un moyen de connexion électrique (2, 3) et au moins un moyen de connexion mécanique (4) ;
- un moyen de commande (5) intégré à l'intérieur d'un second boîtier (11), agencé entre au moins une bride (6) d'un circuit principal et au moins une bride de dérivation (7), ledit moyen de commande (5) comprenant un interrupteur de coupure à gaz, ledit second boîtier (11) équipé du moyen de commande (5) étant compris à l'intérieur du premier boîtier (1) ;
- un élément d'actionnement (8) configuré pour actionner le moyen de commande (5) qui effectue les fonctions de coupure, établissement du courant, déconnexion et mise à la terre ; et
- un mécanisme de commande (9) entraînant l'actionnement de l'élément d'actionnement (8) ;
- dans lequel le moyen de connexion mécanique (4) raccorde le mécanisme de commande (9) au premier boîtier (1) ;
l'appareillage de commutation à isolation gazeuse étant **caractérisé en ce que** :
- l'appareillage comprend en outre une pluralité de caches (10) qui incorporent à l'intérieur, de façon concentrique, les brides (6) du circuit principal et les brides de dérivation (7), le milieu entre les brides (6, 7) et le cache (10) étant un gaz ;
- le premier boîtier (1) comprend à l'intérieur les caches (10) qui incorporent les brides (6) du circuit principal et les brides de dérivation (7) ;
- les caches (10) sont constitués d'un matériau ne conduisant pas l'électricité et comprennent des parties creuses, ayant une géométrie cylindrique, qui sont raccordées les unes aux autres au moyen d'un moins un premier moyen de jonction (13) ; et **en ce que**
- les brides (6) du circuit principal et les brides de dérivation (7) ont une géométrie cylindrique,
et **en ce qu'**elles comprennent en outre au moins un second moyen de jonction (14) qui permet la jonction entre les brides (6) du circuit principal ou la jonction entre les brides de dérivation (7).

2. - Appareillage de commutation électrique selon la revendication 1, **caractérisé en ce que** le premier moyen de jonction (13) comprend un matériau élastique, qui permet la jonction et l'étanchéité entre les différentes parties du cache (10).

3. - Appareillage de commutation électrique selon la revendication 1, **caractérisé en ce que** les caches (10) comprennent au moins un moyen de fermeture (12) destiné à être raccordé au moyen du premier moyen de jonction (13) auxdits caches (10) à leurs extrémités ouvertes.

4. - Appareillage de commutation électrique selon la revendication 3, **caractérisé en ce que** le moyen de fermeture (12) est constitué d'un matériau ne conduisant pas l'électricité.

5. - Appareillage de commutation électrique selon la revendication 1, **caractérisé en ce que** le second moyen de jonction (14) comprend une pièce arrondie, au moins un point de fixation (15) et au moins un trou débouchant (21).

6. - Appareillage de commutation électrique selon l'une quelconque des revendications précédentes, **caractérisé en ce que** le premier boîtier (1) est hermétique, blindé et mis à la terre, ainsi qu'isolé dans un gaz diélectrique à une pression relative.

7. - Appareillage de commutation électrique selon la revendication 1, **caractérisé en ce que** le moyen de commande (5) comprend un interrupteur coupe-charge rotatif.

8. - Appareillage de commutation électrique selon la revendication 6, **caractérisé en ce que** les moyens de connexion électrique (2, 3) et le moyen de connexion mécanique (4) sont accessibles depuis l'extérieur du boîtier (1).

9. - Appareillage de commutation électrique selon la revendication 8, **caractérisé en ce que** les moyens de connexion électrique (2, 3) sont électriquement connectés aux brides (6) du circuit principal et aux brides de dérivation (7) respectivement par l'intermédiaire de connexions électriques, lesdites connexions électriques étant entourées d'un diffuseur (16).

10. - Appareillage de commutation électrique selon la revendication 9, **caractérisé en ce que** la connexion électrique entre les moyens de connexion électrique (2, 3) et les brides (6, 7) comprend un connecteur (18) configuré pour connecter au moins une de ses extrémités au moyen de connexion électrique (2) et à une autre de ses extrémités à la bride (6) du circuit principal ou configuré pour être connecté à une extrémité du moyen de connexion électrique (3) et à l'autre extrémité de la bride de dérivation (7).

11. - Appareillage de commutation électrique selon la revendication 10, **caractérisé en ce que** le connecteur (18) comprend au moins une partie conductrice (19) et au moins un moyen de serrage (20), de sorte que la connexion électrique entre ladite au moins une partie conductrice (19) et la bride (6) du circuit principal ou la bride de dérivation (7) est de type à enficher.

12. - Appareillage de commutation électrique selon la revendication 11, **caractérisé en ce que** le connecteur (18) comprend une borne conductrice (22) agencée entre la bride (6) du circuit principal ou la bride de dérivation (7) et ladite au moins une partie conductrice (19).

13. - Appareillage de commutation électrique selon la revendication 9, **caractérisé en ce que** les moyens de connexion électrique (2, 3) sont raccordés aux caches (10) au moins du premier moyen de jonction (13).
